# EUROPÄISCHE PATENTSCHRIFT

(11) **EP 1 507 677 B1**
(45) Veröffentlichungstag und Bekanntmachung des Hinweises auf die Patenterteilung: **08.02.2006**
(21) Anmeldenummer: 03720220.7
(22) Anmeldetag: 20.03.2003
(51) Int. Cl.: B60K 31/00, B60K 28/00, B60K 28/16

(54) **VERFAHREN UND VORRICHTUNG ZUR BEEINFLUSSUNG DES ANTRIEBSMOMENTS**
METHOD AND DEVICE FOR INFLUENCING DRIVING TORQUE
PROCEDE ET DISPOSITIF POUR INFLUER SUR LE COUPLE D'ENTRAINEMENT

(30) Priorität: 18.05.2002 DE 10222198
(43) Veröffentlichungstag der Anmeldung: 23.02.2005
(73) Patentinhaber: ROBERT BOSCH GMBH, 70442 Stuttgart (DE)
(72) Erfinder: SCHMITT, Johannes, 71706 Markgroeningen (DE)
(86) Internationale Anmeldenummer: PCT/DE2003/000924
(87) Internationale Veröffentlichungsnummer: WO 2003/097399

(56) Entgegenhaltungen:
- EP-A- 0 511 473
- EP-A- 1 000 794
- DE-C- 19 632 621

## Beschreibung

### Stand der Technik

Die Erfindung betrifft ein Verfahren und eine Vorrichtung zur Beeinflussung des Antriebsmoments.

Aus der DE 41 12 141 A1 ist ein Antriebsschlupfregelsystem mit Brems- und gegebenenfalls Schlupfregler bekannt. Um das Anfahren zu erleichtern, wird vor dem Anfahren ein Antriebsrad gebremst. Dreht das nicht gebremste Rad durch, so wird der Bremsdruck am gebremsten Rad erniedrigt.

Dieses Antriebsschlupfregelsystem setzt voraus, dass der Fahrer während des Anfahrvorgangs das Fahrpedal genügend stark betätigt. Dieser Punkt ist besonders wichtig bei einem Anfahrvorgang bergaufwärts.

Nicht berücksichtigt ist dagegen der Fall, dass der Fahrer das Fahrpedal nicht genügend stark betätigt.

Aus der EP 1 000 794 A1 ist für den Startvorgang vorgesehene automatische Kupplungssteuerung bekannt. Während des Startvorgangs wird mit der Erhöhung der Motordrehzahl zugleich die Kupplung betätigt. Sollte durch den Schließvorgang der Kupplung infolge der wachsenden Last die Motordrehzahl abnehmen, dann wird das vom Motorsteuergerät angeforderte Motormoment erhöht.

Die Merkmale der Oberbegriffe der unabhängigen Ansprüche sind der EP 1 000 794 A1 entnommen.

### Vorteile der Erfindung

Die Erfindung betrifft ein Verfahren zur Beeinflussung des Antriebsmoments eines Fahrzeugs während eines Anfahrvorgangs im Sinne einer positiven Fahrzeuglängsbeschleunigung, bei dem
- über wenigstens eine Fahrpedalstellung ein Maß für das vom Fahrer angeforderte Antriebsmoment vorgegeben wird und
- das Antriebsmoment des Fahrzeugs durch Beeinflussung der Motorsteuerung fahrerunabhängig über das vom Fahrer angeforderte Maß hinaus erhöht wird.

Der Vorteil dieser Erfindung ist insbesondere darin zu sehen, dass dem ungeübten Fahrer, welcher möglicherweise beim Anfahren das Fahrpedal nicht genügend stark betätigt, eine wesentliche Hilfestellung gegeben wird. Der Begriff "positive Fahrzeugbeschleunigung" ist dabei so zu verstehen, dass die Fahrzeuggeschwindigkeit in der gewünschten Fahrtrichtung (d.h. der Anfahrrichtung) zunimmt.

Dabei wird die Erhöhung des Antriebsmoments während des Anfahrvorgangs dann durchgeführt wenn
- ein erkannter Anfahrwunsch des Fahrers vorliegt und
- die Notwendigkeit einer Anfahrunterstützung erkannt wird. Damit wird sichergestellt, dass das erfindungsgemäße Verfahren nur dann abläuft, wenn es auch wirklich erforderlich ist. Es wird jedoch nicht dem geübten Fahrer die Kontrolle über den Anfahrvorgang entzogen.

Weiter wird die Notwendigkeit einer Anfahrunterstützung dann erkannt wenn
- der schlupfgeregelte Anfanrvorgang des Fahrzeugs auf einem geneigten Untergrund in Hangrichtung aufwärts erfolgt und
- durch das vom Fahrer über wenigstens eine Fahrpedalstellung angeforderte Antriebsmoment keine Beschleunigung des Fahrzeugs in Hangrichtung aufwärts erzielt wird.

Gerade das Anfahren am Berg bereitet dem ungeübten Fahrer leicht Probleme. Deshalb eröffnet sich hier ein wesentlicher Einsatzbereich für die vorliegende Erfindung.

Es ist von Vorteil, wenn ein Anfahrwunsch des Fahrers durch Auswertung der Stellung des Fahrpedals erkannt wird. Das hängt damit zusammen, dass die Stellung des Fahrpedals in einem Fahrzeug ohnehin überwacht wird, da diese Information für das Motorsteuergerät benötigt wird. Deshalb ist in dieser Ausgestaltung kein wesentlicher Zusatzaufwand an Sensorik notwendig.

Eine weitere Ausführungsform ist dadurch gekennzeichnet, dass das Antriebsmoment des Fahrzeugs fahrerunabhängig über das vom Fahrer gewünschte Maß hinaus bis zu einem Schwellenwert erhöht wird, der aus wenigstens der Fahrzeugmasse oder dem Neigungswinkel des geneigten Untergrundes oder dem Fahrbahnreibwert oder dem Antriebsschlupf ermittelt wird. Dabei kann der Neigungswinkel des geneigten Untergrunds beispielsweise durch einen in Längsrichtung orientierten Querbeschleunigungssensor ermittelt werden.

Eine vorteilhafte Ausführungsform zeichnet sich dadurch aus, dass ausgehend von dem vom Fahrer über wenigstens eine Fahrpedalstellung angeforderten Antriebsmoment dieses Antriebsmoment solange erhöht wird, bis die Fahrzeuglängsbeschleunigung einen vorgebbaren Schwellenwert erreicht.
Damit wird verhindert, dass die Fahrzeuglängsbeschleunigung zu große Werte annimmt.

Eine vorteilhafte Ausgestaltung der Erfindung besteht darin, dass bei Auftreten von überhöhtem Antriebsschlupf keine weitere Erhöhung des Antriebsmoments erfolgt. Dies ist deshalb sinnvoll, da eine weitere Erhöhung des Antriebsschlupfes lediglich zu einem Durchdrehen der Räder führen würde.

Es ist von Vorteil, wenn die Erhöhung des Antriebsmoments so erfolgt, dass die Erhöhungsgeschwindigkeit des Antriebsmoments mit zunehmendem Antriebsschlupf geringer wird. Dadurch wird ein übermäßiger Antriebsschlupf vermieden.

Eine vorteilhafte Ausgestaltung ist dadurch gekennzeichnet, dass bei aktiv werdender Antriebsschlupfregelung diese den Anfahrvorgang schlupfoptimiert regelt.

Die erfindungsgemäße Vorrichtung zur Beeinflussung des Antriebsmoments eines Fahrzeugs während eines Anfahrvorgangs im Sinne einer positiven Fahrzeugbeschleunigung umfasst
- Ermittlungsmittel, in denen über wenigstens eine Fahrpedalstellung ein Maß für das vom Fahrer angeforderte An - triebsmoment ermittelt wird und
- Erhöhungsmittel, in denen das Antriebsmoment des Fahrzeugs durch Beeinflussung der Motorsteuerung fahrerunabhangig über das in den Ermittlungsmitteln ermittelte Maß hinaus erhöht wird.

Weiter wird die Erhöhung des Antriebsmoments während des Anfahrvorgangs dann durchgeführt, wenn
- ein erkannter Anfahrwunsch des Fahrers vorliegt und
- der schlupfgeregelte Anfahrvorgang des Fahrzeugs auf einem geneigten Untergrund in Hangrichtung aufwärts erfolgt und
- durch das vom Fahrer über wenigstens eine Fahrpedalstellung angeforderte Antriebsmoment keine Beschleunigung des Fahrzeugs (ax) in Hangrichtung aufwärts erzielt wird.

### Zeichnung

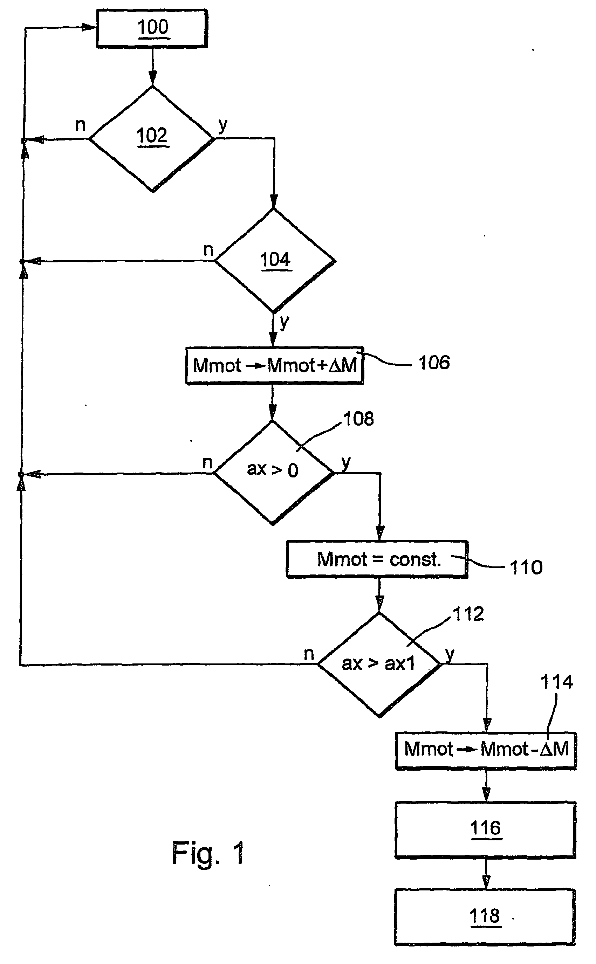

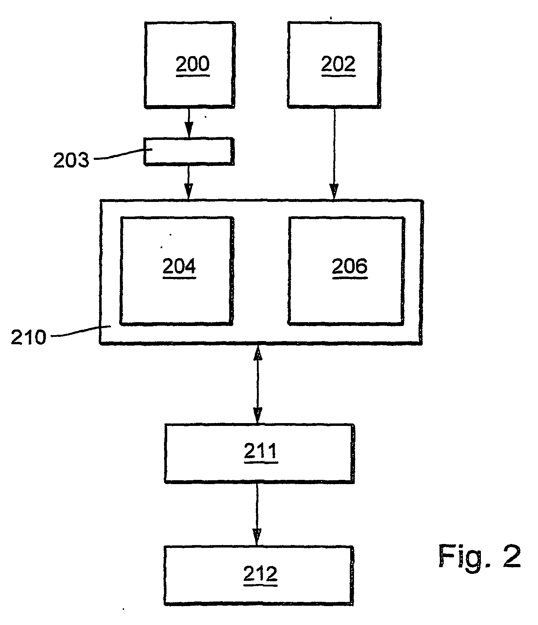

Die Zeichnung besteht aus den Figuren 1 und 2.
In Fig. 1 ist der Ablauf des erfindungsgemäßen Verfahrens dargestellt.
In Fig. 2 ist der Aufbau der erfindungsgemäßen Vorrichtung dargestellt.

### Ausführungsbeispiele

Bei Präsentationen von ASR-Systemen oder ESP-Systemen fällt mitunter auf, dass manche Fahrer das Fahrpedal nicht hinreichend stark niederdrücken, um z.B. an einer Steigung anzufahren. Auch kommt es vor, dass bereits durch das akustische Geräusch eines durchdrehenden Rades das Fahrpedal durch den Fahrer nicht stärker betätigt wird, obwohl dies notwendig wäre, um über einen Bremseneingriff das zum Anfahren notwendige Sperrmoment aufzubringen. Übliche ASR-Systeme (ASR = Antriebsschlupfregelung) und Fahrdynamikregelungssysteme haben nicht die Funktionalität, ein über die Fahrervorgabe hinausgehendes Antriebsmoment einzustellen. Eine Ausnahme bildet die Motorschleppmomentregelung MSR, welche jedoch nur bei Bremsschlupf an den Antriebsrädern oder im Lastwechselfall aktiv wird. Zudem führt die Motorschleppmomentregelung nicht zu einer positiven Beschleunigung.

Deshalb wird bei der vorliegenden Erfindung situationsabhängig beim Anfahren das vom Fahrer eingestellte Antriebsmoment in geeigneter Weise erhöht, bis der Anfahrvorgang beendet ist oder abgebrochen wird.
Voraussetzung zur Aktivierung ist
- ein erkannter Anfahrwunsch des Fahrers,
- die Notwendigkeit einer Anfahrunterstützung und
- ein Nichtansprechen von Sicherheitsfunktionen.

Ein Anfahrwunsch des Fahrers kann beispielsweise durch eine Überprüfung erkannt werden, ob der Fahrer das Fahrpedal betätigt und ob zugleich das Motormoment einen Schwellenwert überschreitet.

Die Notwendigkeit einer Anfahrunterstützung kann beispielsweise aus der Neigung der Fahrbahn (z.B. über einen in Fahrzeuglängsrichtung ausgerichteten Beschleunigungssensor messbar) ermittelt werden. Daraus sowie aus der Kenntnis weiterer Fahrzeugdaten (z.B. Fahrzeugmasse) kann das für einen Anfahrvorgang erforderliche Mindestmotormoment berechnet werden. Eine Anfahrunterstützung ist beispielsweise dann notwendig, wenn das vom Fahrer vorgegebene Motormoment kleiner als das berechnete Mindestmotormoment ist.
Die Notwendigkeit einer Anfahrunterstützung kann auch dann vorliegen, wenn trotz Fahrpedalbetätigung des Fahrers ein Rückwärtsrollen des Fahrzeugs festgestellt wird.

Das Anheben des Antriebsmomentes kann auf unterschiedliche Art erfolgen:
1. Das Fahrerwunschmoment wird variiert. Das Fahrerwunschmoment wird dabei über die Stellung des Gaspedals vorgegeben..
2. Der MSR-Funktionspfad wird genutzt.
3. Der Tempomat-Funktionspfad wird genutzt.
4. Die Fahrpedalcharakteristik wird verändert.
5. Das Anheben des Antriebsmomentes kann durch Zuschalten von weiteren Antriebsquellen wie beispielsweise einem Elektromotor erfolgen.

Unter dem Begriff des "Tempomat" wird dabei eine Geschwindigkeitsregelung verstanden, welche eine vom Fahrer vorgegebene Wunschgeschwindigkeit hält. Wechselt beispielsweise die die Fahrbahnneigung während der Fahrt von eben nach ansteigend, dann ist der Tempomat in der Lage, selbständig das Motormoment zu erhöhen (um die Geschwindigkeit konstant zu halten). Sind in einem Fahrzeugsteuergerät bereits die MSR-Funtionalität oder eine Tempomat-Funktionalität enthalten, dann kann diese Funktionalität für die vorliegende Erfindung mitbenutzt werden.

Im Falle der Umsetzung in einem ASR-System oder einem Fahrdynamikregelungssystem bietet sich beispielsweise der MSR-Pfad als Lösung an. Das anzuhebende Moment kann durch die Berechnung des Anfahrwiderstandes (d.h. des notwendigen Anfahrmomentes) oder durch Iteration (Zugabe- und Reduzier-Routine, siehe Fig. 1) bestimmt werden. Die ASR- und ESP-Funktion kann dann in bekannter Art und Weise aktiv werden und das schlupfgeregelte Anfahren durchführen. Dadurch wird einem in solchen Situationen ungeübten Fahrer das Anfahren erleichtert und oft erst ermöglicht.

In Figur 1 ist das erfindungsgemäße Verfahren in Form eines Blockdiagrammes dargestellt. In Block 100 ist der Start des Verfahrens. Anschließend wird in Block 102 festgestellt, ob ein Fahreranfahrwunsch vorliegt. Liegt dieser Wunsch vor, dann wird zu Block 104 verzweigt, liegt dieser Wunsch nicht vor, dann wird zu Block 100 zurückverzweigt.

In Block 104 wird untersucht, ob eine Anfahrunterstützung notwendig ist. Ist eine Anfahrunterstützung notwendig, dann wird zu Block 106 weitergegangen, ist eine Anfahrunterstützung nicht notwendig, dann wird zu Block 100 zurückverzweigt.

In Block 106 wird das Motormoment Mmot um den Betrag ΔM erhöht, d.h. Mmot = Mmot + ΔM. Anschließend an Block 106 wird zu Block 108 weitergegangen. Dort wird untersucht, ob das Fahrzeug beschleunigt. Dazu findet eine Abfrage ax > 0 statt. ax bezeichnet dabei die Fahrzeuglängsbeschleunigung.

Ist ax > 0 erfüllt, dann wird zu Block 110 weiterverzweigt, ist die Bedingung in Block 108 dagegen nicht erfüllt, dann wird zu Block 100 zurückgegangen. In Block 110 wird das Motormoment konstant gehalten, d.h. Mmot = konstant. Anschließend an Block 110 findet in Block 112 eine Überprüfung ax > ax1 statt. ax1 ist dabei ein oberer Grenzwert für die Fahrzeuglängsbeschleunigung. Ist ax kleiner als ax1, dann wird zu Block 100 zurückgegangen, das Verfahren beginnt erneut. Ist ax > ax1 dagegen erfüllt, dann findet in Block 114 eine Verringerung des Motormomentes statt: Mmot = Mmot - ΔM. Anschließend an Block 114 wird Block 116 durchgeführt. In Block 116 werden ASR- oder ESP-Funktionen realisiert. Das können beispielsweise Bremseingriffe sein. In Block 118 endet das erfindungsgemäße Verfahren und beginnt danach optional erneut in Block 100.

Es soll noch betont werden, dass die Erhöhung des Motormoments in Block 106 oder die Verringerung des Motormoments in Block 114 nicht jeweils um denselben Betrag erfolgen müssen.

Es ist auch denkbar, in Block 106 eine Erhöhung Mmot = Mmot + ΔM1 und in Block 114 eine Verringerung Mmot = Mmot - ΔM2 durchzuführen, wobei M1 und M2 unterschiedlich sind.

Das maximal zulässige Motormoment Mmot1 ist mit der maximal zulässigen Beschleunigung ax1 über die Newtonsche Bewegungsgleichung verknüpft. Bei bekanntem Motormoment kann beispielsweise aus der Neigung der Fahrbahn (z.B. über einen in Fahrzeuglängsrichtung ausgerichteten Beschleunigungssensor messbar), der Fahrzeugmasse, Reibungskräften usw. die aus dem Motormoment resultierende Beschleunigung ermittelt werden. Wird eine maximale Beschleunigung ax1 zugelassen, so ergibt sich daraus ein maximales Motormoment Mmot1.

Die Erhöhung des Motormoments in Block 106 kann in einer bevorzugten Ausführungsform dann unterbrochen werden, wenn der Antriebsschlupf bereits einen überhöhten Wert aufweist, d.h. wenn der Antriebsschlupf einen Schwellenwert übersteigt. Dabei kann auch die Anzahl der Räder berücksichtigt werden, an denen der Antriebsschlupf überhöht ist. Beispielsweise ist es denkbar, dass dann, wenn der Antriebsschlupf lediglich an einem Rad überhöht ist, weiterhin das Motormoment erhöht wird und zwar solange, bis an zwei Rädern ein überhöhter Antriebsschlupf vorliegt. D.h. ein lediglich an einem Rad auftretender Antriebsschlupf wird nicht berücksichtigt. Es ist auch denkbar, dass ein lediglich an einem Rad auftretender Antriebsschlupf zu einer geringeren Erhöhungsgeschwindigkeit des Motormoments führt, d.h. ein lediglich an einem Rad auftretender übermäßiger Antriebsschlupf wird schwächer als ein an zwei Rädern zugleich auftretender übermäßiger Antriebsschlupf berücksichtigt.

Bei Auftreten eines zunehmenden Antriebsschlupfwertes wird die Erhöhungsgeschwindigkeit des Motormoments (d.h. der Erhöhungsgradient) verringert. Auch bei einer aktiven Antriebsschlupfregelung (ASR) wird das über die Fahrervorgabe hinaus erhöhte Motormoment solange bestehen bleiben, wie der Anfahrwunsch des Fahrers sensiert wird.

Der Aufbau der erfindungsgemäßen Vorrichtung ist in Fig. 2 dargestellt. Dabei haben die Blöcke die folgende Bedeutung:
Block 200: Fahrer
Block 202: Sensorik
Block 203: Ermittlungsmittel
Block 204: Erhöhungsmittel
Block 206: weitere ASR-Komponenten
Block 210: ASR-Steuergerät
Block 211: Motorsteuerung
Block 212: Stellglied (z.B. Drosselklappe)

Der Fahrerwunsch bzgl. des Motormomentes wird vom Fahrer in Block 200 über die Fahrpedalstellung vorgegeben. Die Ausgangssignale werden an Block 203 weitergereicht. Die Fahrpedalstellung wird in den Ermittlungsmitteln 203 ausgewertet und dem ASR-Steuergerät 210 zugeführt. Das ASR-Steuergerät 210 weist dabei zwei wesentliche Bestandteile auf:
1. die Erhöhungsmittel 204, welche eine Erhöhung des Motormoments über den Fahrerwunsch hinaus erlauben sowie
2. Block 206, welcher alle weiteren ASR-Komponenten enthält.

Die Ausgangssignale der Sensorik 202 werden ebenfalls dem ASR-Steuergerät 210 zugeführt.

Das ASR-Steuergerät 210 steht in Wechselwirkung mit der Motorsteuerung 211, welche wiederum Stellglieder 212 (beispielsweise eine Drosselklappe) ansteuert.

## Patentansprüche

1. Verfahren zur Beeinflussung des Antriebsmoments eines Fahrzeugs während eines Anfahrvorgangs im Sinne einer positiven Fahrzeuglängsbeschleunigung (ax), bei dem
- über wenigstens eine Fahrpedalstellung ein Maß für das vom Fahrer angeforderte Antriebsmoment (Mmot) vorgegeben wird und
- das Antriebsmoment des Fahrzeugs (Mmot) durch Beeinflussung der Motorsteuerung fahrerunabhängig über das vom Fahrer angeforderte Maß hinaus erhöht wird,
**dadurch gekennzeichnet, dass**
die Erhöhung des Antriebsmoments während des Anfahrvorgangs dann durchgeführt wird, wenn
- ein erkannter Anfahrwunsch des Fahrers vorliegt und
- der schlupfgeregelte Anfahrvorgang des Fahrzeugs auf einem geneigten Untergrund in Hangrichtung aufwärts erfolgt und
- durch das vom Fahrer über wenigstens eine Fahrpedalstellung angeforderte Antriebsmoment keine Beschleunigung des Fahrzeugs (ax) in Hangrichtung aufwärts erzielt wird.

2. Verfahren nach Anspruch 1, **dadurch gekennzeichnet, dass** ein Anfahrwunsch des Fahrers durch Auswertung der Stellung des Fahrpedals erkannt wird.

3. Verfahren nach Anspruch 1, **dadurch gekennzeichnet, dass** das Antriebsmoment des Fahrzeugs fahrerunabhängig über das vom Fahrer gewünschte Maß hinaus bis zu einem Schwellenwert (Mmot1) erhöht wird, der aus wenigstens der Fahrzeugmasse oder dem Neigungswinkel des geneigten Untergrundes oder dem Fahrbahnreibwert oder dem Antriebsschlupf ermittelt wird.

4. Verfahren nach Anspruch 1, **dadurch gekennzeichnet, dass** ausgehend von dem vom Fahrer über wenigstens eine Fahrpedalstellung angeforderten Antriebsmoment dieses Antriebsmoment solange erhöht wird, bis die Fahrzeuglängsbeschleunigung einen vorgebbaren Schwellenwert (ax1) erreicht.

5. Verfahren nach Anspruch 1, **dadurch gekennzeichnet, dass** bei Auftreten von überhöhtem Antriebsschlupf keine weitere Erhöhung des Antriebsmoments (Mmot) erfolgt.

6. Verfahren nach Anspruch 1, dass die Erhöhung des Antriebsmoments (Mmot) so erfolgt, dass die Erhöhungsgeschwindigkeit des Antriebsmoments mit zunehmendem Antriebsschlupf geringer wird.

7. Verfahren nach Anspruch 5 oder 6, **dadurch gekennzeichnet, dass** bei aktiv werdender Antriebsschlupfregelung diese den Anfahrvorgang schlupfoptimiert regelt.

8. Vorrichtung zur Beeinflussung des Antriebsmoments eines Fahrzeugs während eines schlupfgeregelten Anfahrvorgangs im Sinne einer positiven Fahrzeugbeschleunigung (ax), bei der
- in Ermittlungsmitteln über wenigstens eine Fahrpedalstellung ein Maß für das vom Fahrer angeforderte Antriebsmoment ermittelt wird und
- in Erhöhungsmitteln das Antriebsmoment des Fahrzeugs (Mmot) durch Beeinflussung der Motorsteuerung fahrerunabhängig über das in den Ermittlungsmitteln ermittelte Maß hinaus erhöht wird
**dadurch gekennzeichnet, dass**
die Erhöhung des Antriebsmoments während des Anfahrvorgangs dann durchgeführt wird, wenn
- ein erkannter Anfahrwunsch des Fahrers vorliegt und
- der schlupfgeregelte Anfahrvorgang des Fahrzeugs auf einem geneigten Untergrund in Hangrichtung aufwärts erfolgt und
- durch das vom Fahrer über wenigstens eine Fahrpedalstellung angeforderte Antriebsmoment keine Beschleunigung des Fahrzeugs (ax) in Hangrichtung aufwärts erzielt wird.

## Claims

1. Method for influencing the driving torque of a vehicle during a driving off process in the sense of a positive longitudinal acceleration of the vehicle (ax), in which
- an amount of the driving torque (Mmot) which is requested by the driver is predefined by means of at least one accelerator pedal position, and
- the driving torque of the vehicle (Mmot) is increased by influencing the control of the engine independently of the driver beyond the measure requested by the driver,
**characterized in that** the increase in the driving torque during the driving off process is carried out if
- a detected driving off request of the driver is present and
- the slip-controlled driving off process of the vehicle is taking place in an uphill direction on an inclined underlying surface, and
- the driving torque requested by the driver by means of at least one accelerator pedal position does not bring about any acceleration of the vehicle (ax) in the uphill direction.

2. Method according to Claim 1, **characterized in that** a driving off request of the driver is detected by evaluating the position of the accelerator pedal.

3. Method according to Claim 1, **characterized in that** the driving torque of the driver is increased independently of the driver beyond the amount requested by the driver to a threshold value (Mmot1) which is determined from at least the mass of the vehicle or the angle of inclination of the inclined underlying surface or the coefficient of friction of the underlying surface or the drive slip.

4. Method according to Claim 1, **characterized in that**, starting from the driving torque requested by the driver by means of at least one accelerator pedal position, this driving torque is increased until the longitudinal acceleration of the vehicle reaches a predefinable threshold value (ax1).

5. Method according to Claim 1, **characterized in that**, when increased drive slip occurs, no further increase in the driving torque (Mmot) takes place.

6. Method according to Claim 1, **characterized in that** the increase in the driving torque (Mmot) takes place in such a way that the rate of increase of the driving torque becomes smaller as the drive slip increases.

7. Method according to Claim 5 or 6, **characterized in that**, when the drive slip control becomes active, said drive slip control controls the driving off process in a way which is optimized in terms of slip.

8. Device for influencing the driving torque of a vehicle during a slip-controlled driving off process in the sense of a positive acceleration of the vehicle (ax), in which
- a measure of the driving torque which is requested by the driver is determined in a determining means by means of at least one accelerator pedal position, and
- the driving torque of the vehicle (Mmot) is increased in increasing means, beyond the degree determined in the determining means, by influencing the control of the engine independently of the driver,
**characterized in that** the increase in the driving torque during the driving off process is carried out if
- a detected driving off request of the driver is present and
- the slip-controlled driving off process of the vehicle is taking place in an uphill direction on an inclined underlying surface, and
- the driving torque requested by the driver by means of at least one accelerator pedal position does not bring about any acceleration of the vehicle (ax) in the uphill direction.

## Revendications

1. Procédé pour agir sur le couple moteur d'un véhicule pendant une opération de démarrage au sens d'une accélération longitudinale positive (ax) du véhicule, selon lequel
- une grandeur pour le couple moteur (Mmot) demandé par le conducteur est prédéfinie par au moins une position de l'accélérateur et
- le couple moteur (Mmot) du véhicule est augmenté au-delà de la mesure demandée par le conducteur en agissant sur la commande du moteur indépendamment du conducteur,
**caractérisé en ce que**
le couple moteur est augmenté pendant l'opération de démarrage quand
- le conducteur a exprimé un souhait reconnu de démarrage, et
- le véhicule effectue le démarrage réglé en patinage sur un sol incliné dans le sens de la pente montante, et
- le couple moteur que le conducteur demande par au moins une position de l'accélérateur ne provoque pas d'accélération du véhicule (ax) dans le sens de la pente montante.

2. Procédé selon la revendication 1,
**caractérisé en ce que**
le souhait de démarrage exprimé par le conducteur est reconnu en exploitant la position de l'accélérateur.

3. Procédé selon la revendication 1,
**caractérisé en ce que**
le couple moteur du véhicule est augmenté indépendamment du conducteur au-delà de la mesure souhaitée par le conducteur jusqu'à une valeur seuil (Mmot1) déterminée au moins à partir de la masse du véhicule, de l'angle d'inclinaison du sol, du coefficient de friction de la chaussée ou du patinage à l'accélération.

4. Procédé selon la revendication 1,
**caractérisé en ce que**
à partir du couple moteur que le conducteur demande par au moins une position de l'accélérateur, ce couple moteur est augmenté jusqu'à ce que l'accélération longitudinale du véhicule atteigne une valeur seuil (ax1) prédéfinissable.

5. Procédé selon la revendication 1,
**caractérisé en ce que**
le couple moteur (Mmot) n'est pas plus augmenté quand le patinage à l'accélération devient particulièrement élevé.

6. Procédé selon la revendication 1,
**caractérisé en ce que**
le couple moteur (Mmot) est augmenté de telle manière que la vitesse à laquelle le couple moteur augmente baisse à mesure que le patinage à l'accélération croît.

7. Procédé selon la revendication 5 ou 6,
**caractérisé en ce que**
quand il devient actif, le réglage du patinage à l'accélération optimise l'opération de démarrage quant au patinage.

8. Dispositif pour agir sur le couple moteur d'un véhicule pendant une opération de démarrage réglée en patinage, au sens d'une accélération longitudinale positive (ax) du véhicule, dans lequel
- des moyens de détermination servent à déterminer une grandeur pour le couple moteur que le conducteur demande par au moins une position de l'accélérateur, et
- des moyens d'augmentation servent à augmenter le couple moteur (Mmot) du véhicule au-delà de la mesure déterminée par le conducteur en agissant sur la commande du moteur indépendamment du conducteur,
**caractérisé en ce que**
le couple moteur est augmenté pendant l'opération de démarrage quand
- le conducteur a exprimé un souhait reconnu de démarrage, et
- le véhicule effectue le démarrage réglé en patinage sur un sol incliné dans le sens de la pente montante, et
- le couple moteur que le conducteur demande par au moins une position de l'accélérateur ne provoque pas d'accélération du véhicule (ax) dans le sens de la pente montante.
